# EUROPEAN PATENT SPECIFICATION

(11) **EP 2 007 152 B1**
(45) Date of publication and mention of the grant of the patent: **24.04.2013**
(21) Application number: 07720605.0
(22) Date of filing: 29.03.2007
(51) Int. Cl.: H04W 8/02

(54) **MESSAGE ROUTE METHOD, SYSTEM AND DEVICE BASED ON IP TRANSMISSION**
VERFAHREN, SYSTEM UND EINRICHTUNGEN FÜR NACHRICHTENROUTEN AUF DER BASIS DER IP-ÜBERTRAGUNG
PROCÉDÉ, SYSTÈME ET DISPOSITIF D'ACHEMINEMENT DE MESSAGES BASÉS SUR UNE TRANSMISSION IP

(30) Priority: 31.03.2006 CN 200610066872
(43) Date of publication of application: 24.12.2008
(73) Proprietor: Huawei Technologies Co., Ltd., Longgang District, Shenzhen Guangdong 518129 (CN)
(72) Inventor: DUAN, Xiaoqin, Shenzhen Guangdong 518129 (CN); SUN, Chengzhen, Shenzhen Guangdong 518129 (CN)
(74) Representative: Kreuz, Georg Maria
(86) International application number: PCT/CN2007/001031
(87) International publication number: WO 2007/112678

(56) References cited:
- WO-A-00/74404
- WO-A-98/48587
- WO-A1-2005/048617
- CN-A- 1 496 088
- US-B1- 6 219 546
- 3GPP: "3rd Generation Partnership Project;Technical Specification Group Services and System Aspects;Support of SMS and MMS over generic 3GPP IP access;Release 7" 3GPP DRAFT; TR 23.804-100 CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Budapest; 20050126, 20 February 2005 (2005-02-20), XP050252110
- 3GPP: "3rd Generation Partnership Project; Technical Specification Group Terminals; Technical realization of the Short Message Service (SMS); Point-to-Point (PP)" 3GPP TS 23.040 V3.1.0 (1999-07), July 1999 (1999-07), pages 1-117, XP002533951 3GPP, Sophia Antipolis, France
- MICHEL MOUULY ET AL: "GSM - The System for Mobile Communications" GSM SYSTEM FOR MOBILE COMMUNICATIONS. COMPREHENSIVE OVERVIEW OF THE EUROPEAN DIGITAL CELLULAR SYSTEMS, CELL & SYS, FRANCE, 1 January 1992 (1992-01-01), pages 556-564, XP002148060 ISBN: 978-2-9507190-0-3
- HUAWEI: "Delivery report handling" 3GPP DRAFT; 23204_CR0013R5_(REL-7)_MCC_CORRECTED_CR_RE V_NO-S2-070990R EV_WAS_S2-070908, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Lemesos, Cyprus; 20070312, 28 February 2007 (2007-02-28), XP050208534
- '3GPP TR 23.804 V1.0.0' February 2005, pages 13 - 14, XP008129890
- '3G TS 23.040 V2.0.0' June 1999, pages 15 - 18, XP008129889
- "Digital cellular telecommunications system (Phase 2+); Universal Mobile Telecommunications System (UMTS); Mobile Application Part (MAP) specification (3GPP TS 29.002 version 6.8.0 Release 6); ETSI TS 129 002", ETSI STANDARDS, LIS, SOPHIA ANTIPOLIS CEDEX, FRANCE, vol. 3-CN2;3-CN4, no. V6.8.0, 1 December 2004 (2004-12-01), XP014027802, ISSN: 0000-0001

## Description

### FIELD OF THE INVENTION

The present invention relates to the field of network communication technologies, and in particular, to a method, system and apparatus for routing messages based on IP transmission.

### BACKGROUND

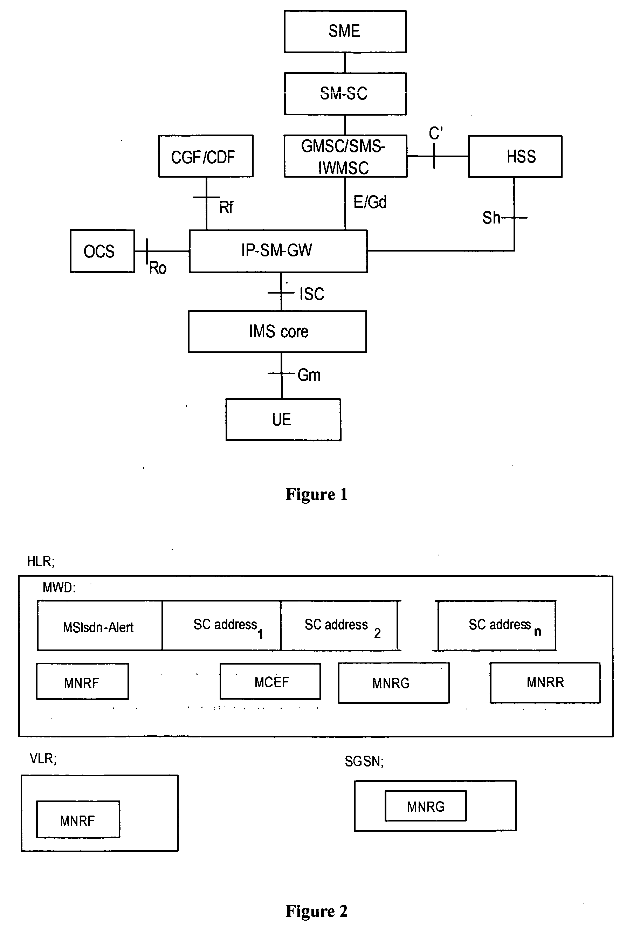

Currently, a network architecture of interworking between an IP Multimedia Subsystem (IMS)-based message service and a traditional Short Message Service (SMS) is shown in Figure 1.

In the network architecture shown in Figure 1, Short Message Entity (SME), Short Message Service Center (SM-SC), Gateway Mobile Switching Center for SMS/Interworking Mobile Switching Center for SMS (SMS-GMSC/SMS-IWMSC), Home Subscriber Server/Home Location Register (HSS/HLR), Charging Gateway Function/Charging Data Function (CGF/CDF), and Online Charging System (OCS) are functional entities for implementing the SMS in a mobile network currently. In the current practice, the SM-SC, the SMS-GMSC and the SMS-IWMSC are integrated in a Short Message Center (SMC) applied in a mobile network rather than working as stand-alone functional entities. In the following text, therefore, an SMC represents a network device that integrates SM-SC, SMS-GMSC and SMS-IWMSC into one.

In Figure 1, the IP Short Message Gateway (IP-SM-GW) is a newly added network entity. The IP-SM-GW implements communication between the IP User Equipment (UE) and the SMS-GMSC/SMS-IWMSC by existing WCDMA/GSM network short message protocols.

An IMS core network contains core logic entities of an IMS domain: Serving Call Session Control Function (S-CSCF), Proxy Call Session Control Function (P-CSCF), and Interrogation Call Session Control Function (I-CSCF). The IMS core network provides a reliable connection between a UE and an IP-SM-GW. When a Session Initiation Protocol (SIP)-based UE uses a message service, the UE needs to be registered to the IMS first, and then registered on the IP-SM-GW through a third-party registration originated by the IMS. The IP-SM-GW notifies the HSS that the UE has been registered and notifies the IP-SM-GW address to the HSS. The HSS saves the status of the IP user as IP Connected, and stores the IP user address and the registered IP-SM-GW address.

The Message-Waiting-Indication (MWI) needs to be applied in the current technical solution to interworking between IMS-based message service and the traditional short message service.

The MWI is used for handling failure of sending messages caused by unreachable UE in the network or exceeded memory capacity of the UE in the traditional SMS.

The MWI includes Messages-Waiting-Data (MWD), Mobile-station-Not-Reachable-for-GPRS (MNRG), Mobile-station-Not-Reachable-Flag (MNRF), Mobile-Not-Reachable-Reason (MNRR), and Mobile-station-Memory-Capacity-Exceeded-Flag (MCEF).

Figure 2 shows the storage location of the information of the MWI in each Network Element (NE).

In Figure 2, the MWD stores the addresses of the SMCs (SC address). Such SMCs have originated a short message termination process to the UE corresponding to the MSIsdn-Alert. However, the short message termination process fails because the UE is unreachable in the network or memory capacity of the UE has been exceeded. The values of MNRF, MNRG, and MCEF are Boolean values.

If the MNRF value is true, it indicates that the failure of the short message termination process is caused by unreachable UE in the CS network domain; otherwise, the MNRF value is false. If the MNRG value is true, it indicates that the failure of the short message termination process is caused by unreachable UE in the PS network domain; otherwise, the MNRG value is false. If the MCEF value is true, it indicates that the failure of the short message termination process is caused by exceeded memory capacity of the UE; otherwise, the MCEF value is false.

The MNRR indicates the cause for unreachable UE in the CS domain and/or PS domain. If the cause for unreachable UE is unknown, the MNRR is in the empty status; otherwise, the MNRR has four status values: No Paging Response via MSC (the UE makes no paging response in the CS domain), No Paging Response via SGSN (the UE makes no paging response in the PS domain), IMSI Detached (the UE is detached in the CS domain), and GPRS Detached (the UE is detached in the PS domain).

When a short message termination process fails, SMS-GMSC receives a message failure delivery report sent by MSC, SGSN, or S-CSCF. In this case, the SMS-GMSC sends a message delivery status report to HSS/HLR. The message delivery status report carries the cause for failure of sending the message, such as unreachable UE or exceeded memory capacity of the UE. The message delivery status report further indicates whether the UE is unteachable in the CS domain and/or the PS domain, and further indicates the cause for unreachable UE, for example, no paging response, or detached in the network.

The HSS/HLR updates the stored MWI according to the parameters carried in the message delivery status report sent from the SMS-GMSC. In this way, when the status of the UE changes (for example, when the UE is attached to the CS/PS domain again, or when the UE has free memory capacity), the HSS/HLR invokes the Alert-SC to originate the short message termination process again.

In the current technical solution to interworking between the IMS-based message service and the traditional message service, the IP-SM-GW needs to send a message delivery report to the traditional message routing entity when sending of a termination message fails or succeeds, the traditional message routing entity knows whether the termination message is transmitted successfully only through the received message delivery report. Accordingly, the HSS/HLR knows whether the termination message is transmitted successfully only through the message delivery status report sent from the traditional message routing entity. Therefore, the HSS/HLR is unable to update the stored MWI according to the message delivery status report. If the called party is unreachable in the CS, PS or IMS domain, the HSS/HLR still sends the routing information of the called party in the CS, PS and IMS domains to the IP-SM-GW in the subsequent message routing process of the called party. Therefore, the IP-SM-GW performs an unnecessary message routing process, which results in waste of network resources.

Moreover, the MWI stored in the HSS/HLR only reflects the status of UE in the CS and PS domains. In some circumstances, the HSS/HLR is unable to perform a short message termination process in time. For example, after the short message termination process fails because the UE is unreachable in the CS, PS and IMS domains, if the UE status does not change in the CS and PS domains but changes only in the IMS domain (for example, when the UE is attached to the IMS domain), the HSS/HLR does not originate a short message termination process again. Consequently, the termination message does not be transmitted to the called party in time, the transmission delay of the termination message is high, and the Quality of Service (QoS) of the message service is low.
3GPP: "3rd Generation Partnership Project; Technical Specification Group Services and System Aspects; Support of SMS and MMS over generic 3GPP IP access; Release 7" 3GPP DRAFT; TR 23.804-100 CLEAN, 3rd GENERATION PARTNERSHIP PROJECT (3GPP), MOBILE COMPETENCE CENTR; 650, ROUTE DES LUCIOLES; F-06921 SOPHIA-ANTIPOLIS CEDEX; FRANCE, vol. SA WG2, no. Budapest discloses an unsuccessful MT delivering procedure. Based on addresses received from the HLR/HSS, the SMS-GMSC shall attempt to deliver the short message via SGSN and/or MSC. If all delivery attempts fail, then the SMSC shall decide whether to set the message waiting flags. If it so decides, the SMSC sends MAP-REPORT-SM-DELIVERY-STATUS to the HLR/HSS with the address of the SM-SC having initiated the SMS MT delivery. And an SMS Alerting procedure discloses that if all SMS MT delivery attempts (via MSC, SGSN and IP-MESSAGE-GW) failed (e.g. because the UE was not reachable), the message to be transferred to IP Based UE is queued in the SM-SC, IP Based UE initiates the common registration procedure (e.g. it has recovered the IP connection to WLAN). If the HLR/HSS receives the registration request from IP Based UE and any of message waiting flags are set, it sends MAP-Alert-SC request message with the list of the SM-SC addresses to SMS-SGMSC. The GMSC sends SC Alert request messages to SM-SCs whose addresses are informed by the HLR/HSS.
3GPP: "3^{rd} Generation Partnership Project; Technical Specification Group Terminals; Technical realization of the Short Message Service (SMS); Point-to-Point (PP)" 3GPP TS 23.040 V3.1.0 discloses that the Messages-Waiting is the service element that enables the PLMN to provide the HLR, SGSN and VLR with which the recipient MS is associated with the information that there is a message in the originating SC waiting to be delivered to the MS. The service element is only used in case of previous unsuccessful delivery attempt(s) due to temporarily absent mobile or MS memory capacity exceeded. And the Mobile-station-Not reachable-for-GPRS (MNRG) is stored in the HLR and SGSN, and the Mobile-station-Not-Reachable-Flag (MNRF) is stored in the HLR and VLR.

### SUMMARY

The embodiments of the present invention provide a method, a system and an apparatus for routing messages based on IP transmission. Therefore, the HSS/HLR can provide available routing information accurately and quickly in a subsequent procedure of routing a message to a called party. This decreases the message transmission delay, improves the QoS of the message service, and improves the message routing efficiency of the traditional message routing entity and the IP-SM-GW.

A method for routing messages based on IP transmission provided in an embodiment of the present invention includes: when sending of a termination message of at least one called party in a network domain fails, receiving by a Home Subscriber Server/Home Location Register, HSS/HLR, from an IP-SMS-GW, information about failure of sending the termination message in the at least one network domain and storing said information; and performing, by the HSS/HLR, a subsequent procedure of routing the termination message to the called party according to the stored information, wherein the information about failure of sending a termination message comprises a termination message sending failure cause.

A system for routing messages based on IP transmission provided in an embodiment of the present invention includes: a HSS/HLR and an IP-SM-GW. The HSS/HLR is configured to receive information, from an IP-SMS-GW, about from an IP-SMS-GW, failure of sending a termination message in at least one network domain when sending of a termination message of a called party in at least one network domain fails, and storing said information, and to perform a subsequent procedure of routing the termination message to the called party according to the stored information in the subsequent termination message routing process.

The above technical solution reveals that, when sending of a termination message to a called party in at least one network domain fails, the HSS/HLR receives and stores information about failure of sending the termination message in at least one network domain. So that the HSS/HLR knows that sending of the termination message in certain network domains or all network domains fails. In this way, in the subsequent procedure of routing the termination message to the called party, the process of routing the termination message can be triggered in time when the HSS/HLR detects change of the status of the called party in any network domain. Therefore, the termination message can be transmitted to the called party at the earliest possible time. Moreover, the HSS/HLR can transmit available routing information to the IP-SM-GW or the traditional routing entity, thus avoiding unnecessary routing processes. The technical solution under the present invention decreases the message transmission delay, improves the QoS of the message service, and improves the message routing efficiency of the traditional message routing entity and the IP-SM-GW.

### BRIEF DESCRIPTION OF THE DRAWINGS

Figure 1 shows a network architecture of interworking between a IMS-based message service and a traditional SMS.

Figure 2 shows the location of the information in the MWI stored in each NE according to the prior art.

Figure 3 shows the location of the information in the MWI stored in each NE in an embodiment of the present invention.

Figure 4 is a flowchart of a method for routing messages based on IP transmission in an embodiment of the present invention.

Figure 5 is a flowchart of a method for routing messages based on IP transmission in another embodiment of the present invention.

Figure 6 is a flowchart of a method for routing messages based on IP transmission in further another embodiment of the present invention.

### DETAILED DESCRIPTION

In the process of interworking between the IMS-based message service and the traditional SMS, when sending of a termination message to the called party in all network domains fails (for example, when the called party is unreachable in CS, PS and IMS domains, or memory capacity of the called party has been exceeded), the termination message cannot be transmitted to the called party successfully. In this case, if the HSS/HLR can record the information about failure of sending the termination message in all network domains, the HSS/HLR is able to trigger the process of transmitting the termination message again by invoking the corresponding Alert function when the status of the called party changes in any network domain (for example, IMS domain). This avoids the defect of the prior art that the network side does not transmit the termination message when the status of called party changes only in the IMS domain. Therefore, the termination message is transmitted to the called party at the earliest possible time, thus reducing the transmission delay of the termination message and improving the QoS of the message service.

Moreover, in the process of interworking between the IMS-based message service and the traditional SMS, when sending of a termination message, in one or two of IMS network domain, CS network domain and PS domain, to the called party fails, if the HSS/HLR can record the information about failure of sending the termination message in these network domains, the HSS/HLR is able to transmit available routing information to the IP-SM-GW or the traditional message routing entity in subsequent procedure of routing the termination message to the called party, thus improving the message routing efficiency.

Therefore, in the technical solution according to an embodiment of the present invention, when sending of a termination message in certain network domains to a called party fails, the IP-SM-GW or the traditional message routing entity transmits the information about failure of sending the termination message to the HSS/HLR. The HSS/HLR receives and stores the information about failure of sending the termination message in these network domains. Therefore, in the subsequent termination message routing process of the called party, the HSS/HLR can transmit available routing information to the IP-SM-GW. Moreover, the process of transmitting the termination message is triggered in time when the HSS/HLR or the IP-SM-GW detects that the status of the called party changes in any network domain and the HSS/HLR stores the information about failure of sending the termination message to the called party in all domains.

The technical solution under the present invention is described in more detail below.

In the technical solution under the prior art, the HSS/HLR stores an MWI. The MWI contains MWD, MNRG, MNRF, MNRR and MCEF. The MNRF, MNRG and MNRR indicate that the short message termination process fails because the called party is unreachable in the CS or PS network domain, and why the called party is unreachable in the CS or PS network domain. The MWI lacks the information indicating that the called party is unreachable in the IMS domain. In an embodiment of the present invention, adding IMS domain related indication information in the MWI stored in the HSS/HLR. Therefore, the HSS/HLR can use MWI to record the information about failure of sending the termination message caused by unreachable called party in the IMS domain. Moreover, in another embodiment of the present invention, it may define new information rather than using MWI to record the information about failure of sending the termination message caused by unreachable called party in the IMS domain or all domains.

The technical solution provided in an embodiment of the present invention is described below, supposing that the IMS domain related indication information is added into MWI.

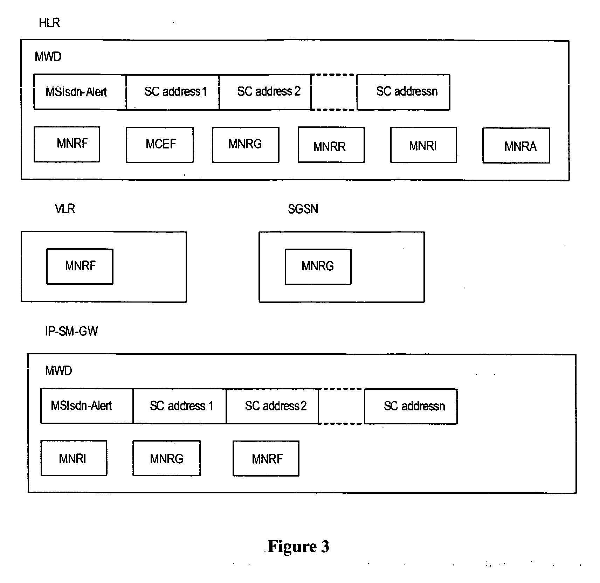

First, new information is added on the basis of the MWI stored in the HSS/HLR in an embodiment of the present invention. The newly added information can indicate that the called party is unreachable in the IMS network domain. In order to facilitate the HSS/HLR to manage the status of the called party in each network domain, in another embodiment of the present invention, it can add indication information into MWI to indicate that the called party is unreachable in all network domains, and add the cause value for why the called party is unreachable in the IMS network domain into the MWI. Moreover, in an embodiment of the present invention, the information related to the message sending status can be stored into IP-SM-GW. For example, MWI is stored in the IP-SM-GW. The MWI stored in the IP-SM-GW may be the same as the MWI stored in the HSS/HLR, or only part of the MWI stored in HSS/HLR, such as MWD for originating an Alert process and the information indicating that the called party is unreachable in the IMS, CS and PS domains. Figure 3 shows MWI in an embodiment of the present invention.

Referring to Figure 3, in an embodiment of the present invention, an MNRA and an MNRI are added into MWI stored in the HSS/HLR, and two status values are added into MNRR. The MNRA indicates that the called party is completely unreachable in all network domains; and the MNRI indicates that the called party is unreachable in the IMS network domain. The values of MNRA and MNRI may be Boolean values. Two status values are added into the MNRR: "No Paging Response via the S-CSCF", which indicates that the called party makes no paging response in the IMS network domain; and "IMS Detached", which indicates that the called party is detached in the IMS network domain. The MWI stored in the IP-SM-GW may includes: MWD; MNRI, MNRG and MNRF. The parameters in the line box in Figure 3 can be used selectively as required by the implementation method.

After the previous information is added into the MWI stored in the HSS/HLR, the HSS/HLR can update the MWI, which includes updating MNRA, MNRI and MNRR, according to the information carried in the received message such as the message delivery status report.

In the process of interworking between the IMS-based message service and the traditional message service, when sending of the termination message fails because the called party is unreachable in the network or the memory capacity of the called party is unavailable, the HSS/HLR receives a message delivery status report, and the HSS/HLR updates the MWI according to the information carried in the message delivery status report. Moreover, when the status of the called party in the network domains changes or memory capacity of the called party is available, the HSS/HLR updates the MWI.

When sending of a termination message fails in all of the network domains registered by the called party and the status of the called party in a certain network domain changes, or when memory capacity of the called party is available, or when another termination message needs to be transmitted, the HSS/HLR can instruct available routing information to the IP-SM-GW or the traditional message routing entity by invoking the Alert-SC according to the updated MWI, and originate a message termination process.

The IP-SM-GW needs to update the MWI according to the information carried in the received message such as a message delivery status report. When sending of a termination message fails in all of the network domains registered by the called party and the status of the called party in a certain network domain changes, or when memory capacity of the called party is available, or when another termination message of the called party needs to be transmitted, the IP-SM-GW can originate a message termination process by invoking the Alert-SC according to the updated MWI.

The previous process in which the HSS/HLR updates the MWI may be: if the attempts of sending a termination message fail on all transmission paths because the called party is unreachable in all network domains, the HSS/HLR sets the MNRA value to "true"; or else to "false". When sending of the termination message fails on the transmission path of the IMS network domain because the called party is unreachable in the IMS network domain, the HSS/HLR sets the MNRI value to "true"; or else to "false". In this case, the HSS/HLR needs to set the status value of the MNRR accordingly. If the value of the MNRA is "true", when the status of the called party in the network domain changes, the HSS/HLR may update the MWI in the following three ways:
1. When the status of the called party in the CS domain changes (for example, when the called party attaches in the CS domain again), the HSS/HLR sets the MNRA value to "false", and set the MNRF value to "false";
2. When the status of the called party in the PS domain changes (for example, when the called party attaches in the PS domain again), the HSS/HLR sets the MNRA value to "false", and set the MNRG value to "false"; and
3. When the status of the called party in the IMS domain changes (for example, when the called party attaches in the IMS domain again), the HSS/HLR sets the MNRA value to "false", and set the MNRI value to "false".

The message delivery status report received by the HSS/HLR may be sent from the IP-SM-GW or the traditional message routing entity. The HSS/HLR may receive the message delivery status reports sent from the IP-SM-GW and the traditional message routing entity respectively.

If the message delivery status report received by the HSS/HLR is sent from the IP-SM-GW, the IP-SM-GW sends the message delivery status report to the HSS/HLR in this process: The IP-SM-GW attempts to send the termination message on the paths provided by the HSS/HLR; when the message is sent successfully, or when the attempts of sending the message fail on all transmission paths, the IP-SM-GW may send a message delivery status report to the HSS/HLR.

If the failure of all attempts to send the termination message is caused by the unreachable called party, the message delivery status report sent by the IP-SM-GW carries the failure cause, that is, the called party is unreachable in all network domains. In this way, the IP-SM-GW may instruct the HSS/HLR to update the corresponding MWI, such as MNRI, MNRF, MNRG, and MNRR. Therefore, the HSS/HLR may trigger another process of transmitting the termination message by invoking the Alert-SC in a proper situation, for example, when the status of the called party in the network domain changes. The IP-SM-GW may update the MWI stored in it, such as MNRI, MNRF and MNRG, according to the status of sending the termination message. The process of triggering another process of transmitting the termination message by invoking the Alert-SC may be originated by the IP-SM-GW.

If the termination message is sent successfully through more than one path, the message delivery status report sent by the IP-SM-GW to the HSS/HLR carries the information about the failure path(s) and the cause of the unsuccessful sending(s). In this way, the HSS/HLR can know the status of the called party in time, and update the corresponding MWI. The IP-SM-GW may also update the MWI stored in it according to the information about the failure path(s).

The IP-SM-GW may send a message delivery report to the traditional message routing entity. If the attempts of sending the termination message fail on all paths, the IP-SM-GW may send a message failure delivery report to the traditional message routing entity, carrying the failure cause.

The IP-SM-GW can determined the failure cause carried in the message failure delivery report sent to the traditional routing entity according to the failure cause carried in the message failure delivery report sent from the S-CSCF, and/or SGSN, and/or MSC.

In the previous process, the message delivery status report may be sent by the traditional message routing entity, rather than the IP-SM-GW, to the HSS/HLR. Nevertheless, the traditional message routing entity may send a message delivery status report to the HSS/HLR even if the IP-SM-GW already sends a message delivery status report to the HSS/HLR. The traditional message routing entity sends a message delivery status report to the HSS/HLR in this process: The traditional message routing entity receives a message failure delivery report from the IP-SM-GW, and sends a message delivery status report to the HSS/HLR according to the failure cause carried in the message failure delivery report, so as to instruct the HSS/HLR to update the corresponding MWI, such as MNRI, MNRF, MNRG, and MNRR. Therefore, the HSS/HLR may trigger another process of transmitting the termination message by invoking the Alert-SC in a proper situation, for example, when the status of the called party in the network domain changes. The process of triggering another process of transmitting the termination message by invoking the Alert-SC may be originated by the IP-SM-GW.

Nevertheless, the traditional message routing entity may determine the failure cause carried in the message failure delivery report sent to the HSS/HLR according to the failure cause carried in the message failure delivery report sent from the IP-SM-GW, and/or SGSN, and/or MSC, and send the message delivery status report to the HSS/HLR.

An IP-based message routing method in an embodiment of the present invention is described below, supposing that the traditional message routing entity sends a message delivery status report to the HSS/HLR.

First, the IP-SM-GW receives a termination message from the traditional message routing entity, and stores the termination message. Then, the IP-SM-GW determines the priority of paths of sending the message according to the Network Domain Select (NeDS) function, and sends the termination message to the called party according to the priority of paths. For example, the priority of paths of sending the message is: S-CSCF -> SGSN -> MSC, the IP-SM-GW sends the message to the S-CSCF first; if the attempt of sending the message via the S-CSCF fails, the S-CSCF returns a message failure delivery report to the IP-SM-GW, carrying the failure cause. The failure cause may include that memory capacity of the UE has been exceeded, the UE is unreachable, or the UE is unsupported. Here the S-CSCF may use a SIP message to send the message failure delivery report to the IP-SM-GW, carrying the failure cause in the body of the SIP message; or use a SIP response message to send the message failure delivery report to the IP-SM-GW.

After receiving the message failure delivery report from the S-CSCF, the IP-SM-GW decides the subsequence processing of the termination message according to the failure cause identified in the message failure delivery report. If the failure cause is exceeded memory capacity of the UE, the IP-SM-GW does not attempt to send the message on other paths, and deletes the stored message and send a message failure delivery report to the traditional message routing entity. The message failure delivery report sent by the IP-SM-GW carries the failure cause: exceeded memory capacity of the UE. If the message sending failure cause is not exceeded memory capacity of the UE, the IP-SM-GW may continue to send the message to the SGSN according to the priority of paths.

If the attempt of sending the message through the SGSN fails, the SGSN returns a message failure delivery report to the IP-SM-GW, carrying the failure cause in the failure report. The failure cause may include: memory capacity of the UE is unavailable, the UE is unreachable, or the UE is unsupported. After receiving a message failure delivery report from the SGSN, the IP-SM-GW can decide the subsequent processing of the termination message according to the failure cause identified in the message failure delivery report, the details of which are not described here any further.

In the previous process, the SGSN and the MSC may send the message failure delivery report to the IP-SM-GW through the existing RP-ERROR message in the current standards.

If the attempts of sending the termination message fail on all paths, the IP-SM-GW sends a message failure delivery report to the traditional message routing entity. The IP-SM-GW determines the failure cause of sending the message carried in the message failure delivery report sent to the traditional routing entity according to the failure cause carried in the message failure delivery report sent from the S-CSCF, SGSN, and MSC.

The IP-SM-GW determines the failure cause in this process: If the message failure delivery report received by the IP-SM-GW contains at least one failure cause that indicates unreachable UE and contains no failure cause that indicates exceeded memory capacity of the UE, the IP-SM-GW determines the failure cause as unreachable called party. If the failure report received by the IP-SM-GW contains at least one failure cause that indicates exceeded memory capacity of the called party, the IP-SM-GW determines the failure cause as exceeded memory capacity of the UE. If the message failure delivery report received by the IP-SM-GW contains a failure cause that indicates unreachable UE and a failure cause that indicates unavailable memory capacity of the UE, the IP-SM-GW determines the failure cause as unavailable memory capacity of the UE. If any message failure delivery report received by the IP-SM-GW contains neither failure cause that indicates unreachable UE nor failure cause that indicates unavailable memory capacity of the UE, the IP-SM-GW decides the failure cause as: the failure cause identified in any message failure delivery report received.

In the previous process, the IP-SM-GW may send the message failure delivery report to the traditional message routing entity through the existing RP-ERROR message in the current standards.

After receiving a message failure delivery report from the IP-SM-GW, the traditional message routing entity sends a message delivery status report to the HSS/HLR if determining that the failure cause identified in the message failure delivery report indicates unreachable UE or exceeded memory capacity of the UE. The message delivery status report may carry the address of the Short Message Center (SMC) that originates the message termination process, and the failure cause of sending the message, that is, unreachable UE or unavailable memory capacity of the UE.

In the previous process, the traditional message routing entity may send the message delivery status report to the HSS/HLR through an existing MAP-REPORT-SM-DELIVERY-STATUS message in the current standards.

After receiving a message delivery status report from the traditional message routing entity, the HSS/HLR updates the MWI according to the information carried in the message delivery status report. The detailed update process may be: If the HSS/HLR determines that the stored MWD dose not contain SMC address carried in the received message delivery status report, the HSS/HLR inserts the SMC address carried in the message delivery status report into the stored MWD. If the failure cause carried in the message delivery status report indicates unreachable UE and the MNRA value stored in the HSS/HLR is "false", the HSS/HLR sets the MNRA value to "true". If the failure cause carried in the message delivery status report indicates exceeded memory capacity of the UE and the MCEF value stored in the HSS/HLR is "false", the HSS/HLR sets the MCEF value to "true".

In subsequent process, the HSS/HLR updates the stored MWI according to the change of the status of the called party monitored by the network. Table 1 shows how the HSS/HLR updates MWI according to the change of the status of the called party.

**Table 1**

| Type of notification received by HSS/HLR | Value of indication before receiving notification | | | Value of indication after update | | | Invoke Alert-SC |
|---|---|---|---|---|---|---|---|
| | MCEF | MNRA | MWD | MCEF | MNRA | MWD | |
| UE attaches in any network again | True | True | "not empty" | True | False | "not empty" | No |
| | True | False | "not empty" | True | False | "not empty" | No |
| | False | True | "not empty" | False | False | Empty | Yes |
| | False | False | Empty | False | False | Empty | No |
| Available memory capacity of the UE | True | True | "not empty" | False | False | Empty | Yes |
| capacity of the UE exists | True | False | "not empty" | False | False | Empty | Yes |
| | False | True | "not empty" | False | False | Empty | Yes |
| | False | False | Empty | False | False | Empty | No |

In Table 1, if any network domain detects that the UE attaches in this network domain again, the HSS/HLR checks the MWI of the MSIsdn-Alert corresponding to the UE. If the MCEF value in the MWI is "false", the MWD value is "not empty" and the MNRA value is "true", the HSS/HLR invokes the Alert-SC function to consecutively instruct all SMCs whose address is stored in the MWD to the originate a message termination process again; the HSS/HLR deletes the SMCs address in the MWD, and updates the MNRA value to "false". If the MCEF value is "true", the MWD value is "not empty" and the MNRA value is "true", the HSS/HLR updates the MNRA value to "false", and updates the flag information corresponding to the network domain to "false". If the MCEF value is "true", the MWD value is "not empty" and the MNRA value is "false", the HSS/HLR updates the flag information corresponding to the network domain in the MWI to "false", without invoking the Alert-SC function. If the MCEF value is "false", the MWD value is "empty" and the MNRA value is "false", the HSS/HLR updates the flag information corresponding to the network domain in the MWI to "false", without invoking the Alert-SC function.

The HSS/HLR may check the MWI corresponding to the MSIsdn-Alert message of the called party after receiving a UE availability notification (for example, the UE attaches in a network domain again, or memory capacity of the UE is available) sent from any network domain. In this case, if the MCEF value is "false", the MWD value is "empty" and the MNRA value is "false", the HSS/HLR responds to the previous notification, without invoking the Alert-SC function. If the MCEF value is "true", the MWD value is "not empty" and the MNRA value is "false", the HSS/HLR invokes the Alert-SC function to consecutively instruct all SMCs whose address is stored in the MWD to originate a message termination process again, the HSS/HLR deletes the SMCs address in the MWD and updates the MCEF value to "false". If the MCEF value is "false", the MWD value is "not empty" and the MNRA value is "true", the HSS/HLR invokes the Alert-SC function to consecutively instruct all SMCs whose address is stored in the MWD to originate a message termination process again, and the HSS/HLR deletes the SMC address in the MWD and updates the MNRA value to "false". If the MCEF value is "true", the MWD value is "not empty" and the MNRA value is "true", the HSS/HLR invokes the Alert-SC function to consecutively instruct all SMCs whose address is stored in the MWD to originate a message termination process again, and the HSS/HLR deletes the SMC address stored in the MWD, updates the MCEF value to "false", and updates the MNRA value to "false".

After detecting that the UE is attached to a network again or receiving a notification which indicates available memory capacity of the UE sent from any network domain, the IP-SM-GW may invoke the Alert-SC function to trigger the process of transmitting the termination message again according to the indication information in the stored MWI (including the information indicating that the UE is unreachable in this network domain and the MSIsdn-Alert information).

Moreover, if an IP-SM-GW attempts to send a termination message through more than one path and an attempt fails due to unreachable UE, the IP-SM-GW may also send a message delivery status report to the HSS/HLR. The detailed process may be: The IP-SM-GW attempts to send a message via S-CSCF first. If sending of the message via S-CSCF fails, the S-CSCF returns a message failure delivery report to the IP-SM-GW. Suppose that the failure cause carried in the message failure delivery report indicates that the UE is unreachable in the IMS network domain. Then, the IP-SM-GW sends the message to the called party via SGSN according to the priority of sending paths. If sending of the message via SGSN fails, the SGSN returns a message failure delivery report to the IP-SM-GW Suppose that the failure cause carried in the message failure delivery report indicates that the UE is unreachable in the PS domain. Afterward, the IP-SM-GW finally attempts to send the message to the UE via MSC. Suppose that the message is sent successfully via MSC. In this case, the IP-SM-GW can send a message delivery status report to the HSS/HLR. The message delivery status report may further identify the diagnosis information about absent UE of the called party, namely, in which network domain the UE is unreachable, and identify the unreachable status, for example, the UE detaches in the IMS network domain, or the UE makes no paging response in the PS network domain.

The IP-SM-GW can use a changed MAP-REPORT-SM-DELIVERY-STATUS message to send a message delivery status report to the HSS/HLR.

The MAP-REPORT-SM-DELIVERY-STATUS message may be changed like this: adding a group of parameters in the message, and using this group of parameters to indicate the result of transmitting the message via the IMS network domain and the diagnosis information about unreachable UE of the called party in the IMS network domain.

After receiving the message delivery status report from the IP-SM-GW, the HSS/HLR updates the stored MWI according to the failure cause carried in the message delivery status report. If the failure cause indicates that the UE detaches in the IMS network domain and the MNRI value stored in the HSS/HLR is "false", the HSS/HLR updates the stored MNRI value to "true", and updates the MNRR status to "IMS Detached".

In the subsequent process, therefore, when a network domain detects change of the status of the UE in the network (for example, the UE attaches again), the HSS/HLR updates the corresponding MWI. For example, when the UE of the called party is attached to the IMS network domain again or makes a paging response, the HSS/HLR updates the MNRI value to "false" and deletes the "No Paging Response via S-CSCF" or "IMS Detached" in the MNRR. Likewise, when the UE attaches in the CS and/or PS network domain or makes a paging response, the HSS/HLR updates the MNRF value and/or MNRG value to "false" and deletes the corresponding cause value in the MNRR.

The method for routing messages based on IP transmission in an embodiment of the present invention is described below with reference to accompanying drawings.

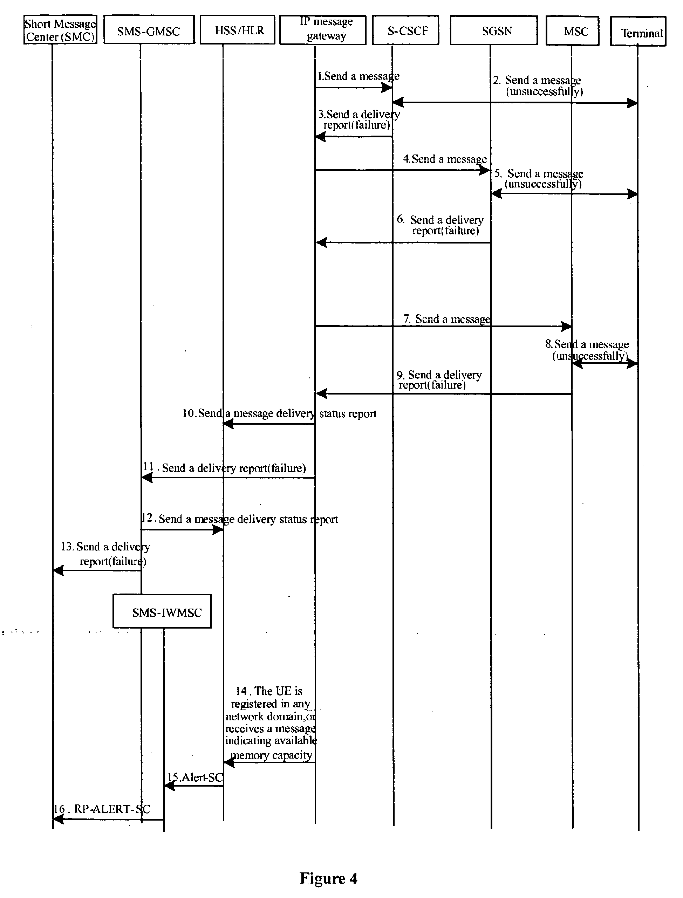

Figure 4 shows an IP-based message routing method, in which both the IP-SM-GW and the traditional message routing entity send a message delivery status report to the HSS/HLR.

As shown in Figure 4, from step 1 to step 9, the IP-SM-GW sends a short message to the UE according to priority of sending paths decided by the NeDS function. If the failure cause identified in the message failure delivery report indicates exceeded memory capacity of the UE, no other sending paths are attempted.

Step 10: The IP-SM-GW sends a message delivery status report to the HSS/HLR. If the message is sent successfully through more than one path, the message delivery status report sent by the IP-SM-GW to the HSS/HLR carries the information about the path(s) attempted before successful sending and the cause for the unsuccessful attempt(s). If the IP-SM-GW attempts to send the message through every path but fails on all paths, the message delivery status report carries the causes for failure of sending the message on each path.

Step 11: The IP-SM-GW sends a message delivery report to the traditional message routing entity SMS-GMSC. If sending of the message fails, a message failure delivery report is sent to the traditional message routing entity SMS-GMSC, carrying the failure cause.

Step 12: Through a MAP-REPORT-SM-DELIVERY-STATUS message, the SMS-GMSC sends a message delivery status report to the HSS/HLR; if the message delivery status report carries an address of the SMC that originates the message termination process, the message sending failure cause is identified in the message delivery status report.

Step 13: The SMS-GMSC sends a message delivery report to the SMC; if the sending of the message fails, the SMS-GMSC sends a message failure delivery report.

Described below is a process of triggering the Alert-SC function when the UE is re-registered in the IMS network domain or there is a notification of available memory capacity of the UE after sending of the message fails.

Step 14: The HSS/HLR or the IP-SM-GW receives a message from the IMS network domain, indicating that the UE of the called party is reachable or has available memory capacity.

Step 15: The HSS/HLR or the IP-SM-GW sends an Alert message to the SMS-IWMSC by invoking the Alert-SC function.

Step 16: The SMS-IWMSC sends an Alert message to the SMC through an RP-ALRERT-SC message, instructing the SMC to originate a message termination process to the UE.

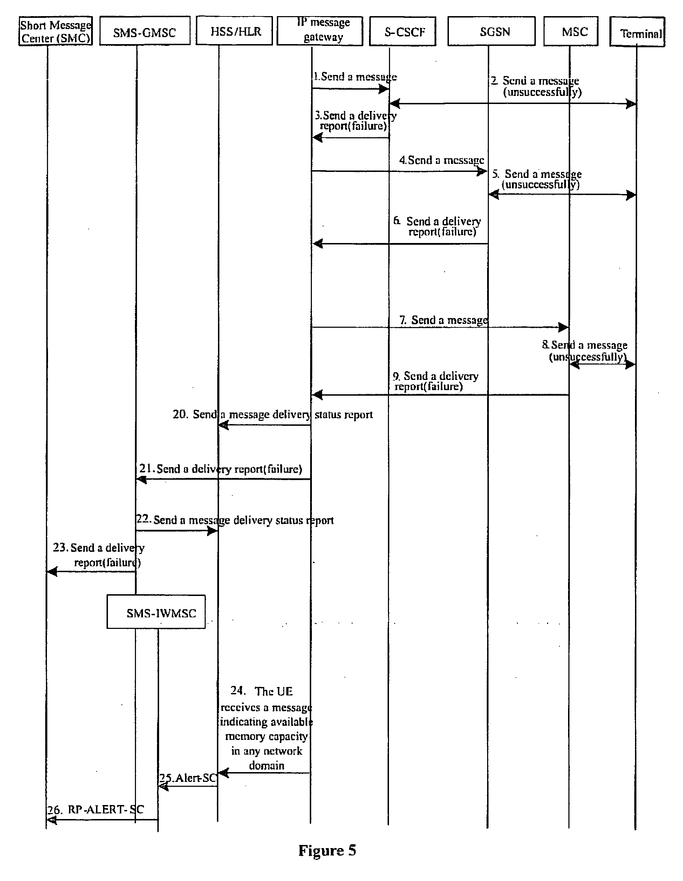

An IP-based message routing method provided in another embodiment of the present invention is described below with reference to Figure 5.

As shown in Figure 5, from step 1 to step 9, the IP-SM-GW sends a short message to the UE according to priority of sending paths decided by the NeDS function. If the IP-SM-GW attempts to send the message through every path but fails on all paths, the IP-SM-GW receives message failure delivery reports from S-CSCF, SGSN and MSC consecutively. Suppose that the failure causes identified in these message failure delivery reports are: the UE detaches in the IMS network, the UE makes no paging response in the PS domain, and the UE has no memory capacity available.

Step 20: The IP-SM-GW sends a message delivery status report to the HSS/HLR. The message delivery status report carries the failure cause, namely, the UE has no memory capacity available; and may further identify the diagnosis information about absent UE, namely, the UE detaches in the IMS network domain, and the UE makes no paging response in the PS domain. Here the IP-SM-GW may use a changed MAP-REPORT SM-DELIVERY STATUS message to send the message delivery status report to the HSS/HLR. A group of parameters are added into the MAP-REPORT-SM-DELIVERY-STATUS message to indicate the result of transmitting the message through the IMS network domain and the diagnosis information about unreachable UE in the IMS network domain.

After receiving the message delivery status report from the IP-SM-GW, the HSS/HLR updates the corresponding MWI according to the failure cause carried in the message delivery status report, namely, the HSS/HLR updates the MNRI value to "true", updates the MNRG value to "true" and updates the MNRR value to "IMS Detached, No Paging Response via SGSN".

Step 21: The IP-SM-GW sends a message failure delivery report to the traditional message routing entity SMS-GMSC through an RP-ERROR message, indicating this failure cause: the UE has no memory capacity available.

Step 22: Through a MAP-REPORT-SM-DELIVERY-STATUS message, the SMS-GMSC sends a message delivery status report to the HSS/HLR; the message delivery status report carries an address of the SMC that originates the message termination process, and the message sending failure causes identified in the message delivery status report indicates that the UE has no memory capacity available.

After receiving the message delivery status report from the SMS-GMSC, the HSS/HLR updates the corresponding MWI according to the information carried in the report. Namely, when the MWD has no SMC address carried in the message delivery status report, the HSS/HLR inserts the SMC address carried in the message delivery status report into the MWD, and updates the MCEF value to "true".

Step 23: The SMS-GMSC sends a message failure delivery report to the SMC.

Step 24: The HSS/HLR or the IP-SM-GW receives a message from any network domain, indicating that the UE of the called party is registered and has available memory capacity.

Step 25: The HSS/HLR or the IP-SM-GW invokes the Alert-SC function to send an Alert message to the SMS-IWMSC, deletes the corresponding SMC address in the stored MWD, updates the MCEF value of the MSIsdn-Alert corresponding to the UE to "false", updates the MNRI value to "false", and deletes the "IMS Detached" in the MNRR.

Step 26: The SMS-IWMSC sends an Alert message to the SMC through an RP-ALRERT-SC message, instructing the SMC to originate a message termination process to the U E.

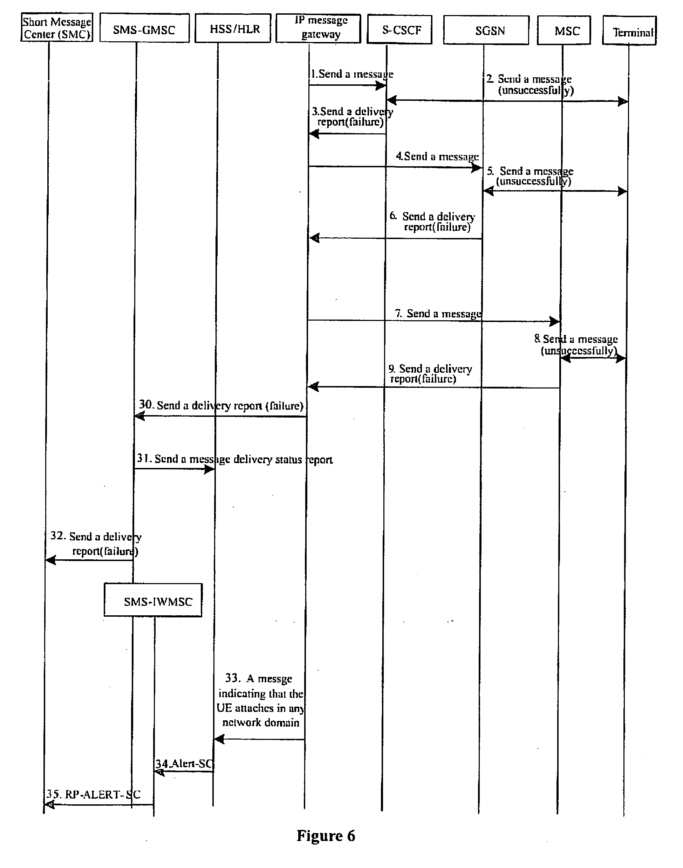

An IP-based message routing method provided in further another embodiment of the present invention is further described below with reference to Figure 6.

As shown in Figure 6, from step 1 to step 9, the IP-SM-GW sends a short message to the UE according to priority of sending paths decided by the NeDS function. If the IP-SM-GW attempts to send the message through every path but fails on all paths, the IP-SM-GW receives message failure delivery reports from S-CSCF, SGSN and MSC consecutively. Suppose that the failure causes identified in these message failure delivery reports are: the UE is unreachable in the IMS network domain, the UE fails in the PS domain system, and the UE is unreachable in the CS domain.

Step 30: The IP-SM-GW sends a message failure delivery report to the SMS-GMSC through an RP-ERROR message, indicating this failure cause: the UE is unreachable.

Step 31: Through a MAP-REPORT-SM-DELIVERY-STATUS message, the SMS-GMSC sends a message delivery status report to the HSS/HLR. The message delivery status report carries an address of the SMC that originates the message termination process and identifies the sending failure cause, namely, unreachable UE.

After receiving the message delivery status report from the SMS-GMSC, the HSS/HLR updates the corresponding MWI according to the information carried in the report. Namely, when the MWD has no SMC address carried in the message delivery status report, the HSS/HLR inserts the SMC address carried in the message delivery status report into the MWD, updates the MNRA value to "true", and accordingly, updates the MNRF, MNRG and MNRI values to "true".

Step 32: The SMS-GMSC sends a message failure delivery report to the SMC.

Step 33: The HSS/HLR or the IP-SM-GW receives a message from any network domain, indicating that the UE attaches in the network again.

Step 34: The HSS/HLR or the IP-SM-GW invokes the Alert-SC function to send an Alert message to the SMS-IWMSC, deletes the corresponding SMC address in the MWD, and updates the MNRI and MNRA values of the MSIsdn-Alert corresponding to the UE to "false".

Step 35: The SMS-IWMSC sends an Alert message to the SMC through an RP-ALRERT-SC message, instructing the SMC to originate a message termination process to the UE.

A system for routing messages based on IP transmission provided in an embodiment of the present invention may include: a receiving and storing module, a routing module, and a sending module. The receiving and storing module and the routing module may be set in the HSS/HLR.

The sending module is adapted to transmit the information about failure of sending the termination message in the network domain to the HSS/HLR when sending of the termination message to the called party in the network domain fails. The sending module is adapted to transmit the information about failure of sending the termination message in the network domain to the HSS/HLR directly, or transmit the information about failure or success of sending the termination message in the network domain to the HSS/HLR via a traditional message routing entity.

The sending module may consist of a first sending submodule, a second sending submodule, and a third sending submodule.

The third sending submodule is adapted to send a message delivery status report to the HSS/HLR directly when the IP-SM-GW attempts to send the termination message through every path provided by the HSS/HLR, and if the termination message is sent successfully or the attempts on all paths fail. If the attempts on all paths fail because the called party is unreachable, the third sending submodule puts the failure cause, that is, the called party is unreachable in all network domains, into the message delivery status report, so as to instruct the HSS/HLR to update the MWI (for example, MNRI, MNRF, MNRG, MNRR) stored in the receiving and storing module. Therefore, the triggering module of the HSS/HLR triggers a second process of transmitting the termination message by invoking the Alert-SC in a proper situation, for example, when the status of the called party in the network domain changes. If the termination message is sent successfully through more than one path, the message delivery status report sent by the third sending submodule to the HSS/HLR carries the information about the path(s) attempted before successful sending and the cause for the unsuccessful attempt(s). In this way, the receiving and storing module of the HSS/HLR can know the status of the called party in time, and update the corresponding MWI. The particulars are given in the preceding method description.

The first sending submodule is adapted to: (i) when the IP-SM-GW receives one or more delivery failure reports, determine the cause value of sending failure according to the information carried in the delivery failure report, and transmit the cause value to the receiving and storing module through a message delivery status report; or (ii) send a message failure delivery report the second sending submodule after determining that sending of the message in all domains fails according to the information carried in the delivery failure report received by the IP-SM-GW Namely, the first sending submodule sends a message delivery report to the second sending submodule in the traditional message routing entity. If the attempts of sending the termination message fail on all paths, the first sending submodule sends a message failure delivery report to the traditional message routing entity, carrying the failure cause. The first sending submodule can decide the failure cause carried in the message failure delivery report sent to the traditional routing entity according to the failure cause carried in the message failure delivery report sent from the S-CSCF, and/or SGSN, and/or MSC. The particulars are given in the preceding method description.

The sending module consists of a first sending submodule and a third sending submodule located in the IP-SM-GW and a second sending submodule located in the traditional message routing entity.

The receiving and storing module is adapted to update the stored MWI after receiving the information about failure of sending the termination message in all domains sent from the sending module. Here an MNRA and an MNRI are added into the MWI, and two status values are added into the MNRR. The MNRA indicates that the called party is completely unreachable in all network domains; and the MNRI indicates that the called party is unreachable in the IMS network domain. The values in of MNRA and MNRI may be Boolean values. Two status values are added into the MNRR: "No Paging Response via the S-CSCF", which indicates that the called party makes no paging response in the IMS network domain; and "IMS Detached", which indicates that the called party is detached in the IMS network domain. The particulars are given in the preceding method description.

The receiving and storing module may consist of a storing submodule and an updating submodule.

The storing submodule is adapted to store MWI. Here the MWI additionally contains an MNRA, which indicates that the called party is unreachable in all domains; an MNRI, which indicates that the called party is unreachable in the IMS domain; and an MNRR, which includes two status values.

The updating submodule is adapted to update the MWI stored in the storing submodule according to the received message delivery status report and the information carried in a user registration message. The detailed update process may be: if the updating submodule determines that the MWD stored in the storing submodule contains no SMC address carried in the received message delivery status report, the updating submodule inserts the SMC address carried in the message delivery status report into the MWD stored in the storing submodule; if the failure cause carried in the message delivery status report indicates unreachable UE and the MNRA value stored in the storing submodule is "false", the updating submodule sets the MNRA value to "true"; if the failure cause carried in the message delivery status report is exceeded memory capacity of the UE and the MCEF value stored in the storing submodule is "false", the updating submodule sets the MCEF value to "true". The particulars are given in the preceding method description.

The routing module may consist of a triggering submodule and a routing submodule. The routing module may include only a triggering submodule or only a routing submodule.

If the triggering submodule determines that the status of the called party changes in any network domain and the receiving and storing module stores the information about failure of sending the termination message to the called party in all network domains, the triggering submodule invokes the Alert-SC to trigger the process of retransmitting the termination message. The particulars are given in the preceding method description.

After the HSS/HLR receives a route query request, the routing submodule identifies the NE sending the route query request according to the route query request. If the NE sending the route query request is the IP-SM-GW, the routing submodule determines available routing information corresponding to a route query request according to the information stored in the receiving and storing module, and transmits the available routing information to the IP-SM-GW The particulars are given in the preceding method description.

Optionally, a failure information storing module and a first triggering module can be set in the IP-SM-GW provided in an embodiment of the present invention.

The failure information storing module may store information about failure of sending the termination message in the network domain. The failure message storage module may store part of the MWI, as described in the preceding method.

If the first triggering module determines that the status of the called party is changed in any network domain and the failure information storing module stores the information about failure of sending the termination message to the called party in all network domains, the first triggering module may invoke an Alert-SC to trigger a process of retransmitting the termination message. The particulars are given in the preceding method description.

A system for routing messages based on IP transmission provided in another embodiment of the present invention may include a receiving and storing module, a routing module, and a second sending module. The receiving and storing module and the routing module are set in the HSS/HLR, and the second sending module is set in the traditional message routing entity.

The second sending module transmits the information about failure of sending a termination message in network domains to the receiving and storing module after the termination message to the called party is sent unsuccessfully in these network domains. Here these network domains may include CS domain, PS domain and IMS domain. Namely, when sending of the termination message to the called party in all network domains fails, the second sending module may send information to the HLR/HSS, indicating the failure of sending the termination message in all network domains; When sending of the termination message to the called party in a network domain fails but finally succeeds, the second sending module sends a short message delivery report to the HLR/HSS, indicating the failure of sending the termination message in a certain domain, such as an IMS domain.

The receiving and storing module and the routing module in this system are basically the same as the equivalents described in the preceding embodiment, and the routing module in this system consists of a triggering submodule and a routing submodule; and the routing module may include only a triggering submodule or only a routing submodule, the details of which are not described here any further.

Although the invention has been described through some exemplary embodiments, the invention is not limited to such embodiments. It is apparent that those skilled in the art can make various modifications and variations to the invention without departing from the scope of the invention. The invention should cover the modifications and variations provided that they fall in the scope of protection defined by the following claims or their equivalents.

## Claims

1. A method for routing messages based on Internet Protocol, IP, transmission, comprising:
receiving directly, by a Home Subscriber Server/Home Location Register, HSS/HLR, information about failure of sending a termination message in at least one network domain, from an IP Short Message Gateway, IP-SM-GW, when sending of the termination message to a called party in the at least > one network domain fails;
storing, by the HSS/HLR, the information about failure of sending the termination message in the at least one network domain; and
performing, by the HSS/HLR, a subsequent procedure of routing the termination message to the called party according to the stored information;
wherein the information about failure of sending a termination message comprises a termination message sending failure cause.

2. The method of claim 1, wherein the process of receiving information about failure of sending the termination message in the at lease one network domain, comprises:
receiving, by the HSS/HLR, the information about failure of sending the termination message when sending of the termination message to the called party in all network domains fails (10).

3. The method of claim 2, wherein the process of receiving information about failure of sending the termination message when sending of the termination message to the called party in all network domains fails, comprises:
sending, by the IP-SM-GW, a message delivery status report to the HSS/HLR when the IP-SM-GW determines that sending of the termination message in all domains fails (20);
receiving, by the HSS/HLR, the information carried in the message delivery status report, wherein the information indicates failure of sending of the termination message in all network domains (20).

4. The method of claim 1, wherein the process of receiving information about failure of sending the termination message in the at lease one network domain, comprises:
receiving, by the HSS/HLR, the information about failure of sending the termination message when sending of the termination message to the called party in a network domain fails because of exceeded memory capacity of the called party (22).

5. The method of claim 4, wherein the process of receiving the information about failure of sending the termination message when sending of the termination message to the called party in the network domain fails because of exceeded memory capacity of the called party, comprises:
sending, by the IP-SM-GW, a message delivery status report to the HSS/HLR when the IP-SM-GW determines that sending of the termination message in the network domain fails because of exceeded memory capacity of the called party (21);
receiving, by the HSS/HLR, the information carried in the message delivery status report, wherein the information indicates failure of sending of the termination message in the network domain because of exceeded memory capacity of the called party (21).

6. The method of any one of claims 1 to 5, wherein the stored information about failure of sending the termination message comprises at least one of an address of a Short Message Center which originates the process of sending the termination message termination.

7. The method of any one of claim 1 to 6, wherein the process of performing the subsequent routing process of the termination message to the called party according to the stored information comprises:
triggering, by the HSS/HLR, a process of transmitting the termination message when the HSS/HLR determines that status of the called party changes in any network domain and the HSS/HLR stores the information about failure of sending the termination message to the called party.

8. The method of claim 1, wherein the process of receiving information about failure of sending the termination message in the at lease one network domain, comprises:
receiving, by the IP-SM-GW, the information about failure of sending the termination message when sending of the termination message to the called party in all network domains fails or sending of the termination message to the called party in a network domain fails because of exceeded memory capacity of the called party.

9. The method of claim 1 or 6, wherein the process of performing the subsequent routing process of the termination message to the called party according to the stored information comprises:
triggering, by the IP-SM-GW, a process of transmitting the termination message when the IP-SM-GW determines that status of the called party changes in any network domain and the IP-SM-GW stores the information about failure of sending the termination message to the called party.

10. The method of claim 7 or 9, wherein the process, in which the HSS/HLR or the IP-SM-GW determines that status of the called party changes in any network domain, comprises:
the HSS/HLR or the IP-SM-GW determines that status of the called party changes when the HSS/HLR or the IP-SM-GW receives a message from any network domain, indicating that the called party is available or has available memory capacity again.

11. A Home Subscriber Server/Home Location Register, HSS/HLR, for routing messages based on IP, Internet Protocol, transmission, comprising means, wherein:
the means are adapted to execute the actions executed by the HSS/HLR in the method as claimed in any of claims 1-10.

12. An IP, Internet Protocol, Short Message Gateway, IP-SM-GW, for routing messages based on IP transmission, comprising means, wherein:
the means are adapted to execute the actions executed by the IP-SM-GW in the method as claimed in any of claims 1-10.

13. A system for routing messages based on IP, Internet Protocol, transmission, comprising a Home Subscriber Server/Home Location Register, HSS/HLR, as claimed in claim 11 and an IP Short Message Gateway, IP-SM-GW, as claimed in claim 12.

## Patentansprüche

1. Verfahren zum Routen von Nachrichten auf der Basis von Internet-Protokoll- bzw. IP-Übertragung, umfassend:
direktes Empfangen von Informationen über den Fehlschlag des Sendens einer Beendigungsnachricht in mindestens einer Netzwerkdomäne durch einen Home Subscriber Server/Home Location Register, HSS/HLR, von einem IP Short Message Gateway, IP-SM-GW, wenn das Senden der Beendigungsnachricht zu einem angerufenen Teilnehmer in der mindestens einen Netzwerkdomäne fehlschlägt;
Speichern der Informationen über den Fehlschlag des Sendens der Beendigungsnachricht in der mindestens einen Netzwerkdomäne durch den HSS/HLR; und
Durchführen einer nachfolgenden Prozedur des Routens der Beendigungsnachricht zu dem angerufenen Teilnehmer durch den HSS/HLR gemäß den gespeicherten Informationen;
wobei die Informationen über den Fehlschlag des Sendens einer Beendigungsnachricht eine Beendigungsnachricht-Sendefehlschlagsursache umfassen.

2. Verfahren nach Anspruch 1, wobei der Prozess des Empfangens von Informationen über den Fehlschlag des Sendens der Beendigungsnachricht in der mindestens einen Netzwerkdomäne Folgendes umfasst:
Empfangen der Informationen über den Fehlschlag des Sendens der Beendigungsnachricht durch den HSS/HLR, wenn das Senden der Beendigungsnachricht zu dem angerufenen Teilnehmer in allen Netzwerkdomänen fehlschlägt (10).

3. Verfahren nach Anspruch 2, wobei der Prozess des Empfangens von Informationen über den Fehlschlag des Sendens der Beendigungsnachricht, wenn das Senden der Beendigungsnachricht zu dem angerufenen Teilnehmer in allen Netzwerkdomänen fehlschlägt, Folgendes umfasst:
Senden einer Nachrichtenablieferungs-Statusmeldung durch das IP-SM-GW zu dem HSS/HLR, wenn das IP-SM-GW bestimmt, dass das Senden der Beendigungsnachricht in allen Domänen fehlschlägt (20);
Empfangen der in der Nachrichtenablieferungs-Statusmeldung geführten Informationen durch den HSS/HLR, wobei die Informationen den Fehlschlag des Sendens der Beendigungsnachricht in allen Netzwerkdomänen (20) angeben.

4. Verfahren nach Anspruch 1, wobei der Prozess des Empfangens von Informationen über den Fehlschlag des Sendens der Beendigungsnachricht in der mindestens einen Netzwerkdomäne Folgendes umfasst:
Empfangen der Informationen über den Fehlschlag des Sendens der Beendigungsnachricht durch den HSS/HLR, wenn das Senden der Beendigungsnachricht zu dem angerufenen Teilnehmer in einer Netzwerkdomäne aufgrund von überschrittener Speicherkapazität des angerufenen Teilnehmers (22) fehlschlägt.

5. Verfahren nach Anspruch 4, wobei der Prozess des Empfangens der Informationen über den Fehlschlag des Sendens der Beendigungsnachricht, wenn das Senden der Beendigungsnachricht zu dem angerufenen Teilnehmer in der Netzwerkdomäne aufgrund von überschrittener Speicherkapazität des angerufenen Teilnehmers fehlschlägt, Folgendes umfasst:
Senden einer Nachrichtenablieferungs-Statusmeldung durch das IP-SM-GW zu dem HSS/HLR, wenn das IP-SM-GW bestimmt, dass das Senden der Beendigungsnachricht in der Netzwerkdomäne aufgrund von überschrittener Speicherkapazität des angerufenen Teilnehmers (21) fehlschlägt; und
Empfangen der in der Nachrichtenablieferungs-Statusmeldung geführten Informationen durch den HSS/HLR, wobei die Informationen Fehlschlag des Sendens der Beendigungsnachricht in der Netzwerkdomäne aufgrund von überschrittener Speicherkapazität des angerufenen Teilnehmers (21) angeben.

6. Verfahren nach einem der Ansprüche 1 bis 5, wobei die gespeicherten Informationen über den Fehlschlag des Sendens der Beendigungsnachricht mindestens eine einer Adresse eines Short Message Center, das den Prozess des Sendens der Beendigungsnachrichten-Beendigung einleitet, umfassen.

7. Verfahren nach einem der Ansprüche 1 bis 6, wobei der Prozess des Durchführens des nachfolgenden Routing-Prozesses der Beendigungsnachricht zu dem angerufenen Teilnehmer gemäß den gespeicherten Informationen Folgendes umfasst:
Triggern eines Prozesses zum Senden der Beendigungsnachricht durch den HSS/HLR, wenn der HSS/HLR bestimmt, dass sich ein Status des angerufenen Teilnehmers in irgendeiner Netzwerkdomäne ändert und der HSS/HLR die Informationen über den Fehlschlag des Sendens der Beendigungsnachricht zu dem angerufenen Teilnehmer speichert.

8. Verfahren nach Anspruch 1, wobei der Prozess des Empfangens von Informationen über den Fehlschlag des Sendens der Beendigungsnachricht in der mindestens einen Netzwerkdomäne Folgendes umfasst:
Empfangen der Informationen über den Fehlschlag des Sendens der Beendigungsnachricht durch das IP-SM-GW, wenn das Senden der Beendigungsnachricht zu dem angerufenen Teilnehmer in allen Netzwerkdomänen fehlschlägt oder das Senden der Beendigungsnachricht zu dem angerufenen Teilnehmer in einer Netzwerkdomäne aufgrund von überschrittener Speicherkapazität des angerufenen Teilnehmers fehlschlägt.

9. Verfahren nach Anspruch 1 oder 6, wobei der Prozess des Durchführens des nachfolgenden Routing-Prozesses der Beendigungsnachricht zu dem angerufenen Teilnehmer gemäß den gespeicherten Informationen Folgendes umfasst:
Triggern eines Prozesses zum Senden der Beendigungsnachricht durch das IP-SM-GW, wenn das IP-SM-GW bestimmt, dass sich ein Status des angerufenen Teilnehmers in irgendeiner Netzwerkdomäne ändert und das IP-SM-GW die Informationen über den Fehlschlag des Sendens der Beendigungsnachricht zu dem angerufenen Teilnehmer speichert.

10. Verfahren nach Anspruch 7 oder 9, wobei der Prozess, bei dem der HSS/HLR oder das IP-SM-GW bestimmt, dass sich ein Status des angerufenen Teilnehmers in irgendeiner Netzwerkdomäne ändert, Folgendes umfasst:
der HSS/HLR oder das IP-SM-GW bestimmt, dass sich ein Status des angerufenen Teilnehmers ändert, wenn der HSS/HLR oder das IP-SM-GW eine Nachricht von irgendeiner Netzwerkdomäne empfängt, die angibt, dass der angerufene Teilnehmer wieder verfügbar ist oder wieder verfügbare Speicherkapazität hat.

11. Home Subscriber Server/Home Location Register, HSS/HLR, zum Routen von Nachrichten auf der Basis von IP- bzw. Internet-Protokoll-Übertragung, der Mittel umfasst, wobei
die Mittel dafür ausgelegt sind, die durch den HSS/HLR bei dem Verfahren nach einem der Ansprüche 1-10 ausgeführten Schritte auszuführen.

12. Internet-Protokoll- bzw. IP Short Message Gateway, IP-SM-GW, zum Routen von Nachrichten auf der Basis von IP-Übertragung, das Mittel umfasst, wobei die Mittel dafür ausgelegt sind, die durch das IP-SM-GW bei dem Verfahren nach einem der Ansprüche 1-10 ausgeführten Schritte auszuführen.

13. System zum Routen von Nachrichten auf der Basis von IP- bzw. Internet-Protokoll-Übertragung, das einen Home Subscriber Server/Home Location Register, HSS/HLR, nach Anspruch 11 und ein IP Short Message Gateway, IP-SM-GW, nach Anspruch 12 umfasst.

## Revendications

1. Procédé de routage de messages par transmission selon le Protocole Internet, IP, comprenant :
la réception directe, par un Serveur d'Abonné de Rattachement/Enregistreur de Position de Rattachement, HSS/HLR, d'informations d'échec d'envoi d'un message de terminaison dans au moins un domaine de réseau, depuis une Passerelle de Messages Courts IP, IP-SM-GW, quand l'envoi du message de terminaison à un appelé dans l'au moins un domaine de réseau échoue ;
la mémorisation, par le HSS/HLR, des informations d'échec d'envoi du message de terminaison dans l'au moins un domaine de réseau ; et
l'exécution, par le HSS/HLR, d'une procédure ultérieure de routage du message de terminaison à l'appelé en fonction des informations mémorisées ;
dans lequel les informations d'échec d'envoi d'un message de terminaison comprennent une cause d'échec d'envoi de message de terminaison.

2. Procédé selon la revendication 1, dans lequel le processus de réception d'informations d'échec d'envoi du message de terminaison dans l'au moins un domaine de réseau comprend :
la réception, par le HSS/HLR, des informations d'échec d'envoi du message de terminaison quand l'envoi du message de terminaison à l'appelé dans tous les domaines de réseau échoue (10).

3. Procédé selon la revendication 2, dans lequel le processus de réception des informations d'échec d'envoi du message de terminaison quand l'envoi du message de terminaison à l'appelé dans tous les domaines de réseau échoue comprend :
l'envoi, par l'IP-SM-GW, d'un rapport d'état de délivrance de message au HSS/HLR quand l'IP-SM-GW détermine que l'envoi du message de terminaison échoue dans tous les domaines (20) ;
la réception, par le HSS/HLR, des informations comprises dans le rapport d'état de délivrance de message, les informations indiquant un échec d'envoi du message de terminaison dans tous les domaines de réseau (20).

4. Procédé selon la revendication 1, dans lequel le processus de réception d'informations d'échec d'envoi du message de terminaison dans l'au moins un domaine de réseau comprend :
la réception, par le HSS/HLR, des informations d'échec d'envoi du message de terminaison quand l'envoi du message de terminaison à l'appelé dans un domaine de réseau échoue en raison d'un dépassement de capacité de mémoire de l'appelé (22).

5. Procédé selon la revendication 4, dans lequel le processus de réception des informations d'échec d'envoi du message de terminaison quand l'envoi du message de terminaison à l'appelé dans le domaine de réseau échoue en raison d'un dépassement de capacité de mémoire de l'appelé comprend :
l'envoi, par l'IP-SM-GW, d'un rapport d'état de délivrance de message au HSS/HLR quand l'IP-SM-GW détermine que l'envoi du message de terminaison dans le domaine de réseau échoue en raison d'un dépassement de capacité de mémoire de l'appelé (21) ;
la réception, par le HSS/HLR, des informations comprises dans le rapport d'état de délivrance de message, les informations indiquant un échec d'envoi du message de terminaison dans le domaine de réseau en raison d'un dépassement de capacité de mémoire de l'appelé (21).

6. Procédé selon l'une quelconque des revendications 1 à 5, dans lequel les informations mémorisées relatives à l'échec d'envoi du message de terminaison comprennent au moins l'une d'une adresse d'un Centre de Messages Courts qui lance le processus d'envoi de terminaison du message de terminaison.

7. Procédé selon l'une quelconque des revendications 1 à 6, dans lequel le processus d'exécution du processus de routage subséquent du message de terminaison à l'appelé en fonction des informations mémorisées comprend :
le déclenchement, par le HSS/HLR, d'un processus de transmission du message de terminaison quand le HSS/HLR détermine que l'état de l'appelé change dans n'importe quel domaine de réseau et le HSS/HLR mémorise les informations d'échec d'envoi du message de terminaison à l'appelé.

8. Procédé selon la revendication 1, dans lequel le processus de réception d'informations d'échec d'envoi du message de terminaison dans l'au moins un domaine de réseau comprend :
la réception, par l'IP-SM-GW, des informations d'échec d'envoi du message de terminaison quand l'envoi du message de terminaison à l'appelé dans tous les domaines de réseau échoue ou quand l'envoi du message de terminaison à l'appelé dans un domaine de réseau échoue en raison d'un dépassement de capacité de mémoire de l'appelé.

9. Procédé selon la revendication 1 ou 6, dans lequel le processus d'exécution du processus de routage subséquent du message de terminaison à l'appelé en fonction des informations mémorisées comprend :
le déclenchement, par l'IP-SM-GW, d'un processus de transmission du message de terminaison quand l'IP-SM-GW détermine que l'état de l'appelé change dans n'importe quel domaine de réseau et l'IP-SM-GW mémorise les informations d'échec d'envoi du message de terminaison à l'appelé.

10. Procédé selon la revendication 7 ou 9, dans lequel le processus, dans lequel le HSS/HLR ou l'IP-SM-GW détermine que l'état de l'appelé change dans n'importe quel domaine de réseau, comprend :
la détermination, par le HSS/HLR ou l'IP-SM-GW que l'état de l'appelé change quand le HSS/HLR ou l'IP-SM-GW reçoit un message depuis n'importe quel domaine de réseau, indiquant que l'appelé est disponible ou a de nouveau une capacité de mémoire disponible.

11. Serveur d'Abonné de Rattachement/Enregistreur de Position de Rattachement, HSS/HLR, pour router des messages par transmission selon le Protocole Internet, IP, comprenant des moyens, dans lequel :
les moyens sont adaptés pour exécuter les actions exécutées par le HSS/HLR dans le procédé selon l'une quelconque des revendications 1 à 10.

12. Passerelle de Messages Courts selon le Protocole Internet, IP, IP-SM-GW, pour router des messages par transmission selon le Protocole Internet, IP, comprenant des moyens, dans laquelle :
les moyens sont adaptés pour exécuter les actions exécutées par l'IP-SM-GW dans le procédé selon l'une quelconque des revendications 1 à 10.

13. Système de routage de messages par transmission selon le Protocole Internet, IP, comprenant un Serveur d'Abonné de Rattachement/Enregistreur de Position de Rattachement, HSS/HLR, selon la revendication 11, et une Passerelle de Messages Courts IP, IP-SM-GW, selon la revendication 12.
